(19) Europäisches Patentamt
European Patent Office
Office européen des brevets

(11) **EP 4 779 178 A1**

(12) **EUROPEAN PATENT APPLICATION**
published in accordance with Art. 153(4) EPC

(43) Date of publication:
**22.07.2026 Bulletin 2026/30**

(21) Application number: **24876363.3**

(22) Date of filing: **20.09.2024**

(51) International Patent Classification (IPC):
*F16H 61/04* (2006.01)    *F16H 61/02* (2006.01)

(86) International application number:
**PCT/CN2024/120061**

(87) International publication number:
**WO 2025/077545 (17.04.2025 Gazette 2025/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.10.2023 CN 202311306896**

(71) Applicant: **Dongfeng Motor Group Co., Ltd.**
**Wuhan, Hubei 430056 (CN)**

(72) Inventors:
• ZHANG, Shun
  Wuhan, Hubei 430056 (CN)
• LI, Rulong
  Wuhan, Hubei 430056 (CN)
• LI, Shicheng
  Wuhan, Hubei 430056 (CN)
• JIA, Jiangtao
  Wuhan, Hubei 430056 (CN)
• YAO, Yicong
  Wuhan, Hubei 430056 (CN)

(74) Representative: **Gille Hrabal**
**Partnerschaftsgesellschaft mbB**
**Patentanwälte**
**Brucknerstraße 20**
**40593 Düsseldorf (DE)**

(54) **GEAR SHIFTING DRUM ANGLE CONTROL METHOD, APPARATUS AND DEVICE, AND STORAGE MEDIUM**

(57)    The present application discloses a gear shifting drum angle control method, apparatus and device, and a storage medium. The method comprises: when a gear shifting request instruction is received, determining a target angle and an initial angle of a gear shifting drum; determining whether an initial angle difference between the initial angle and the target angle is smaller than a lower limit value of a preset interval or not; when the initial angle difference is smaller than the lower limit value, keeping the rotating speed of s gear shifting motor unchanged, and determining the current angle difference between the current angle of the gear shifting drum and the target angle; and when the current angle difference is larger than an upper limit value of the preset interval, adjusting the rotating speed of the gear shifting motor on the basis of the current angle difference until the current angle difference is smaller than a preset threshold value. By means of the described solution, reciprocating fluctuation of the rotating speed of the gear shifting motor caused by rebound of the gear shifting drum during gear shifting is effectively avoided, and the service life of a hybrid transmission is prolonged.

Fig. 2

## Description

### Field of the Invention

The present application belongs to the technical field of hybrid transmission control, and in particular relates to a gear shifting drum angle control method, apparatus, device and storage medium.

### Background of the Invention

With increasing attention from the international community on energy security and environmental protection, countries have imposed increasingly stringent requirements on vehicle emissions. Reducing dependence on energy and achieving energy saving and emission reduction have become urgent issues for the sustainable development of the world economy. Consequently, hybrid vehicles and pure electric vehicles have gradually become the development trend in the automotive industry. Hybrid vehicles combine a motor and an engine to achieve hybrid functions such as energy saving and emission reduction, idle stop, regenerative braking energy recovery, and motor drive, offering advantages including reduced fuel consumption, extended driving range, and relatively high technological maturity, and are widely favored by users.

The power system of a hybrid vehicle generally comprises a drive motor, a generator, and an engine. These three power sources can be combined according to working conditions to output torque at the wheel end to drive the vehicle. In hybrid transmissions, a common shifting mechanism adopts a single gear plus clutch configuration. The combination of power sources allows the vehicle to enter different working modes through clutch control: when the clutch is disengaged, the vehicle operates in pure electric mode or series mode, with wheel end torque provided by the drive motor; and when the clutch is engaged, the vehicle operates in parallel mode, with wheel end torque provided by the drive motor and the engine together, or solely by the engine. The disengagement and engagement of the clutch is controlled by the vehicle control unit (VCU) and executed by the hybrid transmission control unit (HTCU). Similarly, the opening and closing of the shift is controlled by the VCU and executed by the HTCU. For clutchless hybrid transmissions, the shifting mechanism usually adopts a gear shifting drum - shift fork - synchronizer configuration, in which the gear shifting motor drives the gear shifting drum through planetary gear reduction to perform shifting.

Currently, during the gear shifting in the vehicles with clutchless hybrid transmission, due to mechanical rebound of the gear shifting drum in the shifting mechanism, the rotating speed of the gear shifting motor fluctuates reciprocally, which may lead to damage of the hybrid transmission.

## Summary of the Invention

The embodiments of the present application provide a gear shifting drum angle control method, apparatus, device, and storage medium, which can at least to some extent reduce the reciprocating fluctuation of the rotating speed of the gear shifting motor during gear shifting and increase the service life of the hybrid transmission.

Other features and advantages of the present application will become apparent from the following detailed description, or can be partially learned through practice of the present application.

According to a first aspect of the embodiments of the present application, a gear shifting drum angle control method is provided, and the method comprises the following steps:

determining a target angle and an initial angle of a gear shifting drum upon receiving a shift request instruction;

determining whether an initial angle difference between the initial angle and the target angle is smaller than a lower limit value of a preset interval;

when the initial angle difference is smaller than the lower limit value, keeping the rotating speed of a gear shifting motor unchanged, and determining a current angle difference between the current angle of the gear shifting drum and the target angle; and

when the current angle difference is greater than an upper limit value of the preset interval, adjusting the rotating speed of the gear shifting motor according to the current angle difference, until the current angle difference is smaller than a preset threshold.

In some embodiments of the present application, based on the above solution, the step of determining the target angle of the gear shifting drum comprises:

obtaining a target gear from the shift request instruction; and

determining the target angle of the gear shifting drum according to the target gear.

In some embodiments of the present application, based on the above solution, the step of determining the current angle difference between the current angle of the gear shifting drum and the target angle comprises:

determining a current motor angle according to the current rotation number of the gear shifting motor and the current measured angle of the gear shifting motor;

determining the current angle of the gear shifting drum as a quotient of the current motor angle divided by a gear shifting transmission ratio; and

determining the current angle difference as a difference between the current angle and the target angle.

In some embodiments of the present application, based on the above solution, the current motor angle is calculated according to the following formula:

$$M_2 = N*359 + M_1 - M_0;$$

wherein
$M_2$ is the current motor angle, N is the current rotation number, $M_1$ is the current measured angle, and $M_0$ is the angle of the gear shifting motor at zero position.

In some embodiments of the present application, based on the above solution, the step of adjusting the rotating speed of the gear shifting motor according to the current angle difference until the current angle difference is smaller than the preset threshold comprises:

determining a target rotating speed of the gear shifting motor according to the current angle difference;

determining a rotating speed difference between the current rotating speed of the gear shifting motor and the target rotating speed; and

performing current control of the gear shifting motor according to the rotating speed difference, until the current angle difference is smaller than the preset threshold.

In some embodiments of the present application, based on the above solution, the step of determining the target rotating speed of the gear shifting motor according to the current angle difference comprises:

determining an angular velocity of the gear shifting drum according to the current angle difference; and

determining the target rotating speed of the gear shifting motor according to the angular velocity.

In some embodiments of the present application, based on the above solution, after the step of determining the current angle difference between the current angle and the target angle, the method further comprises:

when the initial angle difference is greater than or equal to the lower limit value, determining the current angle difference between the current angle of the gear shifting drum and the target angle; and

adjusting the rotating speed of the gear shifting motor according to the current angle difference, until the current angle difference is smaller than the preset threshold.

According to a second aspect of the embodiments of the present application, a gear shifting drum angle control apparatus is provided, and the apparatus comprises:

an angle determination unit, which is configured to determine a target angle and an initial angle of a gear shifting drum upon receiving a shift request instruction;

an angle judgment unit, which is configured to determine whether an initial angle difference between the initial angle and the target angle is smaller than a lower limit value of a preset interval;

a rotating speed control unit, which is configured, when the initial angle difference is smaller than the lower limit value, to keep the rotating speed of a gear shifting motor unchanged and determine a current angle difference between the current angle of the gear shifting drum and the target angle; and

the rotating speed control unit is further configured, when the current angle difference is greater than an upper limit value of the preset interval, to adjust the rotating speed of the gear shifting motor according to the current angle difference until the current angle difference is smaller than a preset threshold.

According to a third aspect of the embodiments of the present application, a gear shifting drum angle control device is provided, and comprises a processor and a memory, wherein the memory stores computer program instructions executable by the processor, and when the computer program instructions are executed by the processor, the instructions for implementing the method according to any one of the methods of the first aspect described above are realized.

According to a fourth aspect of the embodiments of the present application, a computer-readable storage medium is provided, and the computer-readable storage medium stores computer program instructions, and the computer program instructions are loaded and executed by a processor to implement the method according to any one of the methods of the first aspect described above.

In the present application, a target angle and an initial angle of a gear shifting drum are determined upon receiving a shift request instruction; it is determined whether an initial angle difference between the initial angle and the target angle is smaller than a lower limit value of a preset interval; when the initial angle difference is smaller than the lower limit value, the rotating speed of a gear shifting motor is kept unchanged, and a current angle difference between the current angle of the gear shifting drum and the target angle are determined; and when the current angle difference is greater than an upper limit value of the preset interval, the rotating speed of the gear shifting motor is adjusted according to the current angle difference, until the current angle difference is smaller than a preset threshold. According to the above solution, the reciprocating fluctuation of the rotating speed of the gear shifting motor caused by the rebound of the gear shifting drum during gear shifting is effectively avoided, thereby increasing the service life of the hybrid transmission.

It should be understood that the foregoing general description and the following detailed description are merely exemplary and explanatory, and do not limit the present application.

**Brief Description of the Drawings**

The drawings are incorporated into the specification and form a part thereof, illustrating embodiments in accordance with the present application and being used together with the specification to explain the principles of the present application. It is obvious that the drawings in the following description are only a part of embodiments of the present application, for those of ordinary skill in the art, other drawings may also be obtained based on these drawings without any inventive effort. In the figures:

Fig. 1 shows a structural diagram of a gear shifting mechanism in one embodiment of the present application;

Fig. 2 shows a simulation diagram of a position of a gear shifting drum and a rotating speed of a gear shifting motor in one embodiment of the present application;

Fig. 3 shows a flowchart of a gear shifting drum angle control method in one embodiment of the present application;

Fig. 4 shows a simulation diagram of a position of a gear shifting drum and a rotating speed of a gear shifting motor in another embodiment of the present application;

Fig. 5 shows a flowchart of a gear shifting drum angle control method in another embodiment of the present application;

Fig. 6 shows a block diagram of a gear shifting drum angle control apparatus in one embodiment of the present application; and

Fig. 7 shows a structural diagram of a gear shifting drum angle control device in one embodiment of the present application.

**Detailed Description of the Embodiments**

In the following, the technical solutions in the embodiments of the present application will be described clearly and completely in combination with the drawings in the embodiments of the present application. Obviously, the described embodiments are only a part of the embodiments of the present application, not all of the embodiments. Based on the embodiments in the present application, all other embodiments obtained by those of ordinary skill in the art without inventive efforts shall fall within the protection scope of the present application.

In addition, the described features, structures, or characteristics can be combined in any suitable manner in one or more embodiments. In the following description, numerous specific details are provided in order to give a full understanding of the embodiments of the present application. However, those skilled in the art will realize that the technical solutions of the present application can be practiced without one or more of the specific details, or other methods, components, apparatus, steps, etc. can be adopted. In other cases, well-known methods, apparatus, implementations, or operations are not described in detail so as to avoid obscuring aspects of the present application.

The block diagrams shown in the drawings merely represent functional entities and do not necessarily correspond to physically independent entities. That is, the functional entities can be implemented in software form, or can be implemented in one or more hardware modules or integrated circuits, or can be implemented in different networks and/or processor devices and/or microcontroller devices.

The flowcharts shown in the drawings are illustrative only, and do not necessarily comprise all contents and operations/steps, nor must they be executed in the order described. For example, some operations/steps can be further decomposed, and some operations/steps can be combined or partially combined. Therefore, the actual order of execution may change according to actual conditions.

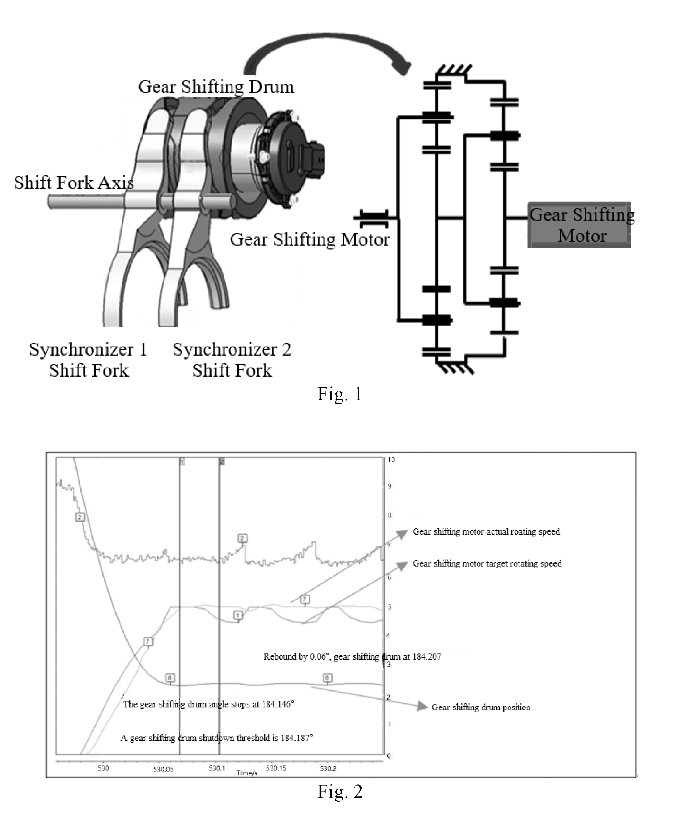

To enable those skilled in the art to better understand the present application, the gear shifting mechanism involved in the present application is first briefly described with reference to Fig. 1.

Referring to Fig. 1, Fig. 1 shows a structural diagram of a gear shifting mechanism in one embodiment. In a clutchless hybrid multi-gear transmission, the shifting mechanism adopts a gear shifting drum-shift fork-synchronizer configuration. The gear shifting motor outputs torque through rotation, which is reduced in speed and increased in torque by a planetary gear reduction mechanism, driving the shift fork to reciprocate laterally along the shift fork axis, thereby moving the synchronizer sleeve left and right to engage or disengage gears. The gear shifting drum is essentially a cam mechanism, and the rotational movement of the gear shifting drum can be converted into axial movement of the shift fork and the synchronizer.

Fig. 2 shows a simulation diagram of a position of a gear shifting drum and a rotating speed of a gear shifting motor in one embodiment. As shown in Fig. 2, currently, when the deviation between the actual angle of the gear shifting drum and the target angle is smaller than a fixed value, the gear shifting motor will actively stop. Assuming that the target angle of the gear shifting drum is 183.123°, and the calibrated fixed value is 1.064°, when the actual angle of the gear shifting drum is smaller than a stopping threshold of 184.187° (wherein 184.187° = 183.123° + 1.064°), the gear shifting motor stops. When the target angle of the gear shifting drum shifts from 212° to 183.123° for gear disengagement, due to resistance, the gear shifting drum stops at 184.146°. At this time, the actual angle of the gear shifting drum is smaller than 184.187°, the target rotating speed of the gear shifting motor is zero, and the gear shifting motor stops. Due to the presence of mechanical elastic force, a force is applied to the motor shaft, causing the motor to rotate in a reverse direction. As a result, the angle of the gear shifting drum increases by 0.06°, and the actual angle becomes 184.207°, which is greater than 184.187°. At this time, the gear shifting motor starts working again. This process repeats reciprocally, thereby causing an oscillation phenomenon.

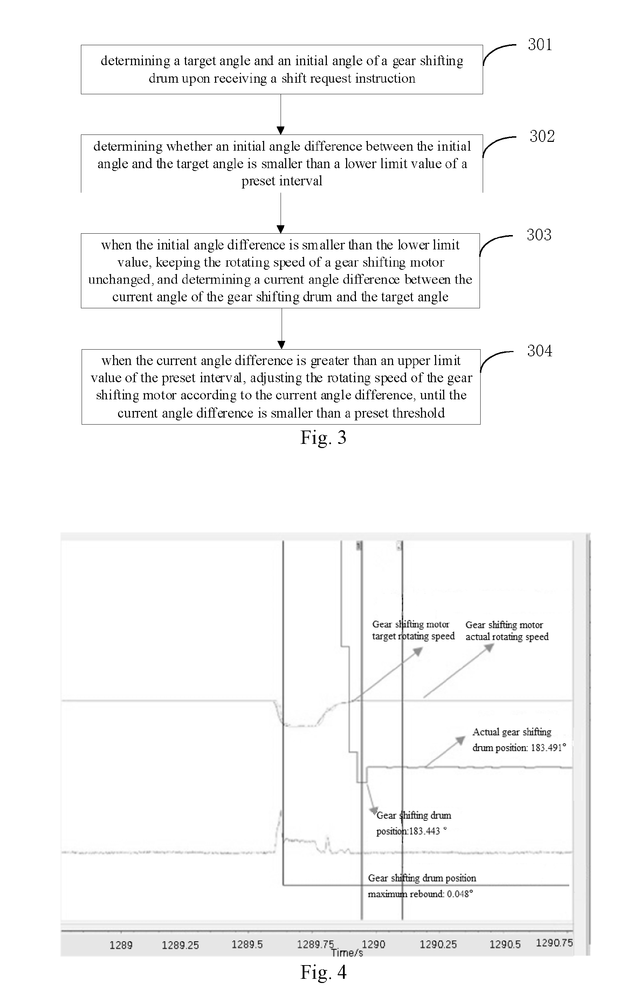

In order to solve the above problem, the embodiments of the present application provide a gear shifting drum angle control method. As shown in Fig. 3, the method can comprise S301 to S304.

In S301, a target angle and an initial angle of the gear shifting drum are determined when a shift request instruction is received.

The target angle refers to the angle that the gear shifting drum needs to reach, and the initial angle refers to the angle of the gear shifting drum at the moment when the shift request instruction is received.

It can be understood that the HTCU, serving as the actuator of the gear shifting mechanism, follows the gear request instruction from the VCU, and the HTCU determines whether to perform gear shifting according to whether the gear request instruction from the VCU is received. When the gear request instruction from the VCU is not received, gear shifting is not performed and the current gear is maintained; and when the gear request instruction from the VCU is received, control of the angle deviation is required until the angle difference between the current angle of the gear shifting drum and the target angle is smaller than a certain threshold, after which the gear shifting is considered completed.

In some embodiments, a target gear can be obtained from the shift request instruction; and the target angle of the gear shifting drum can be determined according to the target gear.

Specifically, there is a correspondence between the target gear of the gear shifting drum and the target angle, and the target angle can be obtained through looking up a table according to the target gear.

In some embodiments, the initial angle of the gear shifting drum can be calculated and determined based on parameters such as the initial rotation number of the gear shifting motor, the initial measured angle of the gear shifting motor, and the gear shifting transmission ratio.

Specifically, the initial motor angle can be determined according to the initial rotation number and the initial measured angle of the gear shifting motor; and the initial angle of the gear shifting drum is determined as a quotient of the initial motor angle divided by the gear shifting transmission ratio.

In S302, it is determined whether an initial angle difference between the initial angle and the target angle is smaller than a lower limit value of a preset interval.

It is understood that the preset interval can also be referred to as a hysteresis interval, and the upper limit value and the lower limit value of the preset interval can be set according to actual conditions. For example, the preset interval can be set as (0.5°, 0.68°).

In S303, when the initial angle difference is smaller than the lower limit value, the rotating speed of the gear shifting motor is kept unchanged, and the current angle difference between the current angle of the gear shifting drum and the target angle is determined.

It should be emphasized that, in the prior art, the control strategy usually compares the initial angle difference with a fixed value, and if the initial angle difference is smaller than this fixed value, the gear shifting motor stops. Due to the rebound of the gear shifting drum, the angle difference may vary. When the angle difference exceeds the fixed value, the gear shifting motor will restart, which causes the rotating speed of the gear shifting motor to fluctuate back and forth. In the embodiments of the present application, a preset interval is set. When the initial angle difference is smaller than the lower limit value of the preset interval, the rotating speed of the gear shifting motor is kept unchanged. Only when the current angle difference exceeds the upper limit value of the preset interval is the rotating speed of the gear shifting motor adjusted, so that the current angle difference decreases to a preset threshold, completing gear shifting.

It can be understood that, due to mechanical rebound of the gear shifting drum, the actual angle of the gear shifting drum changes after the initial angle of the gear shifting drum is determined. Therefore, it is necessary to calculate the current angle of the gear shifting drum and perform more accurate control based on the current angle.

In some embodiments, the current motor angle can be determined according to the current rotation number of the gear shifting motor and the current measured angle of the gear shifting motor; the current angle of the gear shifting drum is determined as a quotient of the current motor angle divided by the gear shifting transmission ratio; and the current angle difference is determined as a difference between the current angle and the target angle.

Specifically, the current motor angle can be obtained in various ways. In some embodiments, the current motor angle is calculated according to the following formula:

$$M_2 = N*359° + M_1 - M_0;$$

$M_2$ is the current motor angle, N is the current rotation number, $M_1$ is the current measured angle, and $M_0$ is the angle of the gear shifting motor at zero position.

In other embodiments, the current motor angle can also be obtained through multiplying the current rotation number by 360°.

Assuming that the current rotation number is 5.81 turns and the gear shifting transmission ratio is 61.07, the current angle of the gear shifting drum can be: 5.81*360°/61.07=34.25°.

It can be understood that the current motor angle calculated in this way, compared to the motor angle obtained by direct measurement, provides a more accurate motor angle, which in turn allows for a more precise determination of the current angle of the gear shifting drum.

In S304, when the current angle difference is greater than the upper limit value of the preset interval, the rotating speed of the gear shifting motor is adjusted according to the current angle difference, until the current angle difference is smaller than a preset threshold.

The preset threshold can be set according to actual conditions, for example, 1° or 1.2°, and the embodiments of the present application do not impose limitations in this regard.

It can be understood that if the current angle difference is smaller than the preset threshold, the gear shift can be considered complete, and if the current angle difference is greater than or equal to the preset threshold, the gear shift is considered incomplete, and further adjustment of the rotating speed of the gear shifting motor is required.

In some embodiments, the target rotating speed of the gear shifting motor can be determined according to the current angle difference; a rotating speed difference between the current rotating speed of the gear shifting motor and the target rotating speed is determined; and current control of the gear shifting motor is performed according to the rotating speed difference until the current angle difference is smaller than the preset threshold.

During the current control of the gear shifting motor, PID control can be performed according to the rotating speed difference.

Specifically, the angular velocity of the gear shifting drum can be determined according to the current angle difference; and the target rotating speed of the gear shifting motor can be determined based on the angular velocity.

In some embodiments, when the initial angle difference is greater than or equal to the lower limit value, the current angle difference between the current angle of the gear shifting drum and the target angle is determined; and the rotating speed of the gear shifting motor is adjusted according to the current angle difference until the current angle difference is smaller than the preset threshold.

It can be understood that if the initial angle difference is greater than or equal to the lower limit value, the rotating speed of the gear-shifting motor can be directly adjusted so that the current angle difference between the current angle and the target angle is less than the preset threshold, thereby completing gear shifting.

Referring also to Fig. 4, Fig. 4 is a simulation diagram of a position of a gear shifting drum and a rotating speed of a gear shifting motor after being controlled by the gear shifting drum angle control method in the embodiment of the present application. As shown in Fig. 4, the maximum rebound of the gear shifting drum angle is 0.048°, and the target rotating speed of the gear shifting motor remains at 0. It can be seen that the preset interval is able to cover the range of the reverse force, and no oscillation occurs in the target rotating speed of the gear shifting motor.

In the embodiments of the present application, a target angle and an initial angle of a gear shifting drum are determined upon receiving a shift request instruction; it is determined whether an initial angle difference between the initial angle and the target angle is smaller than a lower limit value of a preset interval; when the initial angle difference is smaller than the lower limit value, the rotating speed of a gear shifting motor is kept unchanged, and a current angle difference between the current angle of the gear shifting drum and the target angle are determined; and when the current angle difference is greater than an upper limit value of the preset interval, the rotating speed of the gear shifting motor is adjusted according to the current angle difference, until the current angle difference is smaller than a preset threshold. According to the above solution, the reciprocating fluctuation of the rotating speed of the gear shifting motor caused by the rebound of the gear shifting drum during gear shifting is effectively avoided, thereby increasing the service life of the hybrid transmission.

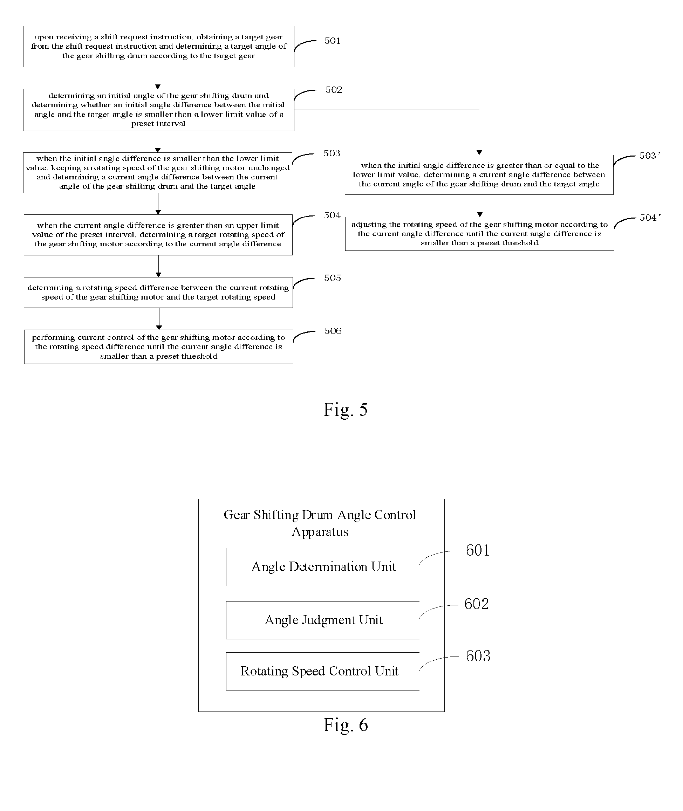

Fig. 5 shows a flowchart of a gear shifting drum angle control method in another embodiment. As shown in Fig. 5, the gear shifting drum angle control method can comprise the following steps:

S501, upon receiving a shift request instruction, obtaining a target gear from the shift request instruction and determining a target angle of the gear shifting drum according to the target gear;

S02, determining an initial angle of the gear shifting drum and determining whether an initial angle difference between the initial angle and the target angle is smaller than a lower limit value of a preset interval;

S503, when the initial angle difference is smaller than the lower limit value, keeping a rotating speed of the gear shifting motor unchanged and determining a current angle difference between the current angle of the gear shifting drum and the target angle;

S504, when the current angle difference is greater than an upper limit value of the preset interval, determining a target rotating speed of the gear shifting motor according to the current angle difference;

S505, determining a rotating speed difference between the current rotating speed of the gear shifting motor and the target rotating speed;

S506, performing current control of the gear shifting motor according to the rotating speed difference until the current angle difference is smaller than a preset threshold;

S503', when the initial angle difference is greater than or equal to the lower limit value, determining a current angle difference between the current angle of the gear shifting drum and the target angle;

S504', adjusting the rotating speed of the gear shifting motor according to the current angle difference until the current angle difference is smaller than a preset threshold.

The embodiments of the present application improve the stability of the rotating speed of the gear shifting motor, preventing transmission (gearbox) damage caused by repeated speed fluctuations and avoiding repeated actuation of the gear shifting motor when the transmission is in a direct-drive gear.

The following describes apparatus embodiments of the present application, which can be adopted to implement the gear shifting drum angle control method in the above embodiments of the present application. For details not disclosed in the apparatus embodiments, reference may be made to the embodiments of the gear shifting drum angle control method described above.

Referring to Fig. 6, a block diagram of a gear shifting drum angle control apparatus according to an embodiment of the present application is shown.

As illustrated in Fig. 6, the gear shifting drum angle control apparatus in this embodiment comprises an angle determination unit 601, an angle judgment unit 602, and a rotating speed control unit 603. The angle determination unit 601 is configured, upon receiving a shift request instruction, to determine a target angle and an initial angle of the gear shifting drum; the angle judgment unit 602 is configured to determine whether an initial angle difference between the initial angle and the target angle is smaller than a lower limit value of a preset interval; the rotating speed control unit 603 is configured, when the initial angle difference is smaller than the lower limit value, to keep the rotating speed of a gear shifting motor unchanged and determine a current angle difference between the current angle of the gear shifting drum and the target angle; and the rotating speed control unit 603 is further configured, when the current angle difference is greater than an upper limit value of the preset interval, to adjust the rotating speed of the gear shifting motor according to the current angle difference until the current angle difference is smaller than a preset threshold.

In some embodiments of the present application, based on the above solution, the angle determination unit 601 is further configured to obtain a target gear from the shift request instruction and determine the target angle of the gear shifting drum according to the target gear.

In some embodiments of the present application, based on the above solution, the rotating speed control unit 603 is further configured to determine a current motor angle according to the current rotation number of the gear shifting motor and the current measured angle of the gear shifting motor; determine the current angle of the gear shifting drum as a quotient of the current motor angle divided by the gear shifting transmission ratio; and determine the current angle difference as a difference between the current angle and the target angle.

In some embodiments of the present application, based on the above solution, the current motor angle is calculated according to the following formula:

$$M_2 = N*359 + M_1 - M_0;$$

wherein

$M_2$ is the current motor angle, N is the current rotation number, $M_1$ is the current measured angle, and $M_0$ is the angle of the gear shifting motor at zero position.

In some embodiments of the present application, based on the above solution, the rotating speed control unit 603 is further configured to determine a target rotating speed of the gear shifting motor according to the current angle difference; determine a rotating speed difference between the current rotating speed of the gear shifting motor and the target rotating speed; and perform current control of the gear shifting motor according to the rotating speed difference until the current angle difference is smaller than a preset threshold.

In some embodiments of the present application, based on the above solution, the rotating speed control unit 603 is further configured to determine an angular velocity of the gear shifting drum according to the current angle difference; and determine the target rotating speed of the gear shifting motor based on the angular velocity.

In some embodiments of the present application, based on the above solution, the rotating speed control unit 603 is further configured, when the initial angle difference is greater than or equal to the lower limit value, to determine a current angle difference between the current angle of the gear shifting drum and the target angle; adjust the rotating speed of the gear shifting motor according to the current angle difference until the current angle difference is smaller than the preset threshold.

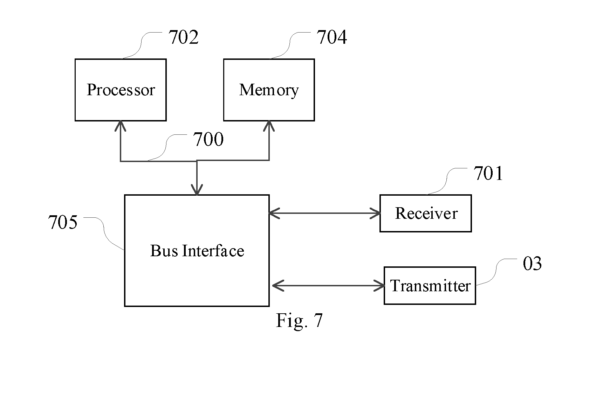

Based on the same inventive concept, some embodiments of the present application further provide a gear shifting drum angle control device. Referring to Fig. 7, Fig. 7 shows a structural diagram of a gear shifting drum angle control device in the present embodiment. The gear shifting drum angle control device comprises one or more memories 704, one or more processors 702, and at least one computer program (computer program instruction) stored on the memory 704 and executable on the processor 702, and when the processor 702 executes the computer program, the methods as described above are implemented.

In the Fig. 7, a bus architecture (represented by a bus 700) is provided, and the bus 700 can comprise any number of interconnected buses and bridges, linking together various circuits of one or more processors represented by the processor 702 and memories represented by the memory 704. The bus 700 can further link various other circuits, such as peripheral devices, voltage regulators, and power management circuits, which are well known in the art, and thus will not be described in further detail herein. A bus interface 705 provides an interface between the bus 700 and a receiver 701 and a transmitter 703. The receiver 701 and the transmitter 703 can be the same component, namely a transceiver, providing units for communication with various other devices over a transmission medium. The processor 702 is configured to manage the bus 700 and perform general processing, and the memory 704 can be configured to store data used by the processor 702 during operation.

Based on the same inventive concept, some embodiments of the present application provide a computer-readable storage medium, the computer-readable storage medium stores at least one computer program instruction, and the at least one computer program instruction is loaded and executed by a processor to implement the operations of the method described above.

The functions described herein can be implemented in hardware, software executed by a processor, firmware, or any combination thereof. If implemented in the software executed by the processor, the functions can be stored as one or more instructions or code on a computer-readable medium or transmitted via a computer-readable medium. Other examples and embodiments are within the scope and spirit of the present application and the appended claims. For instance, due to the nature of software, the functions described above can be implemented in software executed by a processor, hardware, firmware, hard-wired circuitry, or any combination thereof. In addition, the functional units can be integrated into a single processing unit, or each unit can physically exist separately, or two or more units can be integrated into one unit.

It should be understood that, in the various embodiments provided in the present application, the disclosed technical content can be implemented in other ways. The apparatus embodiments described above are merely illustrative. For example, the division of units represent a logical functional division, and in actual implementation, alternative divisions can be employed, such as: a plurality of units or components can be combined or integrated into another system, or certain features can be omitted or not executed. Additionally, any coupling or direct coupling or communication connection shown or discussed can be an indirect coupling or communication connection through one or more interfaces, units, or modules, and can be in electrical or other forms.

The units described as separate components can or cannot be physically separate, and the components of the control device can or cannot constitute physical units, that is, they can be located in a single place or distributed across a plurality of units. Depending on actual needs, some or all of the units can be selected to achieve the objectives of the embodiments of the present application.

If the integrated unit is implemented as a software functional unit and sold or used as a standalone product, it can be stored on a computer-readable storage medium. Based on this understanding, the technical solution of the present application, or the part that contributes to the existing technology, or the whole or part of the technical solution can be embodied as a software product. This computer software product is stored in a storage medium and comprised several instructions that enable a computer device (which can be a personal computer, server, or network device, etc.) to execute all or part of the steps of the method in the various embodiments of the present application. The storage media described above comprise various media capable of storing computer program instructions, such as USB flash drives, read-only memory (ROM), random access memory (RAM), portable hard drives, magnetic disks, or optical disks.

The above is only exemplary embodiments of the present application and does not limit the scope of the present application. For those skilled in the art, the present application can have various modifications and variations. Any modifications, equivalent substitutions, improvements, etc. made within the spirit and principles of the present application shall be included within the scope of the claims of the present application.

## Claims

1. A gear shifting drum angle control method, comprising the following steps:

   determining a target angle and an initial angle of a gear shifting drum upon receiving a shift request instruction;
   determining whether an initial angle difference between the initial angle and the target angle is smaller than a lower limit value of a preset interval;
   when the initial angle difference is smaller than the lower limit value, keeping the rotating speed of a gear shifting motor unchanged, and determining a current angle difference between the current angle of the gear shifting drum and the target angle; and
   when the current angle difference is greater than an upper limit value of the preset interval, adjusting the rotating speed of the gear shifting motor according to the current angle difference, until the current angle difference is smaller than a preset threshold.

2. The method according to claim 1, wherein the step of determining the target angle of the gear shifting drum comprises:

   obtaining a target gear from the shift request instruction; and
   determining the target angle of the gear shifting drum according to the target gear.

3. The method according to claim 2, wherein the step of determining the current angle difference between the current angle of the gear shifting drum and the target angle comprises:

   determining a current motor angle according to the current rotation number of the gear shifting motor and the current measured angle of the gear shifting motor;
   determining the current angle of the gear shifting drum as a quotient of the current motor angle divided by a gear shifting transmission ratio; and
   determining the current angle difference as a difference between the current angle and the target angle.

4. The method according to claim 3, wherein the current motor angle is calculated according to the following formula:

$$M_2 = N*359 + M_1 - M_0;$$

   wherein
   $M_2$ is the current motor angle, N is the current rotation number, $M_1$ is the current measured angle, and $M_0$ is the angle of the gear shifting motor at zero position.

5. The method according to claim 1, wherein the step of adjusting the rotating speed of the gear shifting motor according to the current angle difference until the current angle difference is smaller than the preset threshold comprises:

   determining a target rotating speed of the gear shifting motor according to the current angle difference;
   determining a rotating speed difference between the current rotating speed of the gear shifting motor and the target rotating speed; and
   performing current control of the gear shifting motor according to the rotating speed difference, until the current angle difference is smaller than the preset threshold.

6. The method according to claim 5, wherein the step of determining the target rotating speed of the gear shifting motor according to the current angle difference comprises:

   determining an angular velocity of the gear shifting drum according to the current angle difference; and
   determining the target rotating speed of the gear shifting motor according to the angular velocity.

7. The method according to claim 1, wherein after the step of determining the current angle difference between the current angle and the target angle, the method further comprises:

   when the initial angle difference is greater than or equal to the lower limit value, determining the current angle difference between the current angle of the gear shifting drum and the target angle; and
   adjusting the rotating speed of the gear shifting motor according to the current angle difference, until the current angle difference is smaller than the preset threshold.

8. A gear shifting drum angle control apparatus, comprising:

   an angle determination unit, which is configured to determine a target angle and an initial angle of a gear shifting drum upon receiving a shift request instruction;
   an angle judgment unit, which is configured to determine whether an initial angle difference between the initial angle and the target angle is smaller than a lower limit value of a preset interval;

a rotating speed control unit, which is configured, when the initial angle difference is smaller than the lower limit value, to keep the rotating speed of a gear shifting motor unchanged and determine a current angle difference between the current angle of the gear shifting drum and the target angle; and

the rotating speed control unit is further configured, when the current angle difference is greater than an upper limit value of the preset interval, to adjust the rotating speed of the gear shifting motor according to the current angle difference until the current angle difference is smaller than a preset threshold.

9.  A gear shifting drum angle control device, comprising: a processor and a memory, wherein the memory stores computer program instructions executable by the processor, and when the computer program instructions are executed by the processor, the instructions for implementing the method according to any one of claims 1 to 7 are realized.

10. A computer-readable storage medium, wherein the computer-readable storage medium stores computer program instructions, and the computer program instructions are loaded and executed by a processor to implement the method according to any one of claims 1 to 7.

Fig. 1

Fig. 2

determining a target angle and an initial angle of a gear shifting drum upon receiving a shift request instruction — 301

determining whether an initial angle difference between the initial angle and the target angle is smaller than a lower limit value of a preset interval — 302

when the initial angle difference is smaller than the lower limit value, keeping the rotating speed of a gear shifting motor unchanged, and determining a current angle difference between the current angle of the gear shifting drum and the target angle — 303

when the current angle difference is greater than an upper limit value of the preset interval, adjusting the rotating speed of the gear shifting motor according to the current angle difference, until the current angle difference is smaller than a preset threshold — 304

Fig. 3

Gear shifting motor target rotating speed

Gear shifting motor actual rotating speed

Actual gear shifting drum position: 183.491°

Gear shifting drum position:183.443 °

Gear shifting drum position maximum rebound: 0.048°

1289    1289.25    1289.5    1289.75    1290    1290.25    1290.5    1290.75
Time/s

Fig. 4

upon receiving a shift request instruction, obtaining a target gear from the shift request instruction and determining a target angle of the gear shifting drum according to the target gear — 501

determining an initial angle of the gear shifting drum and determining whether an initial angle difference between the initial angle and the target angle is smaller than a lower limit value of a preset interval — 502

when the initial angle difference is smaller than the lower limit value, keeping a rotating speed of the gear shifting motor unchanged and determining a current angle difference between the current angle of the gear shifting drum and the target angle — 503

when the current angle difference is greater than an upper limit value of the preset interval, determining a target rotating speed of the gear shifting motor according to the current angle difference — 504

determining a rotating speed difference between the current rotating speed of the gear shifting motor and the target rotating speed — 505

performing current control of the gear shifting motor according to the rotating speed difference until the current angle difference is smaller than a preset threshold — 506

when the initial angle difference is greater than or equal to the lower limit value, determining a current angle difference between the current angle of the gear shifting drum and the target angle — 503'

adjusting the rotating speed of the gear shifting motor according to the current angle difference until the current angle difference is smaller than a preset threshold — 504'

Fig. 5

Gear Shifting Drum Angle Control Apparatus

Angle Determination Unit — 601

Angle Judgment Unit — 602

Rotating Speed Control Unit — 603

Fig. 6

702

704

Processor

Memory

700

701

705

Bus Interface

Receiver

03

Transmitter

Fig. 7

## INTERNATIONAL SEARCH REPORT

| | International application No. |
|---|---|
| | **PCT/CN2024/120061** |

**A. CLASSIFICATION OF SUBJECT MATTER**

F16H61/04(2006.01)i; F16H61/02(2006.01)i

According to International Patent Classification (IPC) or to both national classification and IPC

**B. FIELDS SEARCHED**

Minimum documentation searched (classification system followed by classification symbols)

IPC:F16H

Documentation searched other than minimum documentation to the extent that such documents are included in the fields searched

Electronic data base consulted during the international search (name of data base and, where practicable, search terms used)

CNABS; CNTXT; ENTXTC; CJFD; CNKI: 变速, 换挡, 换档, 毂, 鼓, 辊, 角度差, 电机, 马达, 速度, 转速; USTXT; EPTXT; GBTXT; WOTXT; ENTXT: shift, switch, drum, hub, difference, motor, speed, velocity.

**C. DOCUMENTS CONSIDERED TO BE RELEVANT**

| Category* | Citation of document, with indication, where appropriate, of the relevant passages | Relevant to claim No. |
|---|---|---|
| PX | CN 117366221 A (DONGFENG MOTOR GROUP CO., LTD.) 09 January 2024 (2024-01-09) entire document | 1-10 |
| A | WO 2023053306 A1 (HONDA MOTOR CO., LTD.) 06 April 2023 (2023-04-06) description, paragraphs 11-113, and figures 1-18 | 1-10 |
| A | CN 115405688 A (DONGFENG MOTOR GROUP CO., LTD.) 29 November 2022 (2022-11-29) description, paragraphs 3-102, and figures 1-4 | 1-10 |
| A | CN 101520088 A (HONDA MOTOR CO., LTD.) 02 September 2009 (2009-09-02) entire document | 1-10 |
| A | JP 2009180342 A (HONDA MOTOR CO., LTD.) 13 August 2009 (2009-08-13) entire document | 1-10 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 December 2024** | **04 January 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 779 178 A1

**INTERNATIONAL SEARCH REPORT**
**Information on patent family members**

International application No.

**PCT/CN2024/120061**

| Patent document cited in search report | | | Publication date (day/month/year) | Patent family member(s) | | | Publication date (day/month/year) |
|---|---|---|---|---|---|---|---|
| CN | 117366221 | A | 09 January 2024 | None | | | |
| WO | 2023053306 | A1 | 06 April 2023 | JP | 7524486 | B2 | 29 July 2024 |
| | | | | US | 2024375751 | A1 | 14 November 2024 |
| | | | | EP | 4386235 | A1 | 19 June 2024 |
| | | | | IN | 202417018544 | A | 01 November 2024 |
| CN | 115405688 | A | 29 November 2022 | CN | 115405688 | B | 19 December 2023 |
| CN | 101520088 | A | 02 September 2009 | US | 2009222182 | A1 | 03 September 2009 |
| | | | | US | 8150587 | B2 | 03 April 2012 |
| | | | | ES | 2540227 | T3 | 09 July 2015 |
| | | | | EP | 2098760 | A2 | 09 September 2009 |
| | | | | EP | 2098760 | A3 | 01 August 2012 |
| | | | | EP | 2098760 | B1 | 25 March 2015 |
| | | | | JP | 2009209970 | A | 17 September 2009 |
| | | | | JP | 4958238 | B2 | 20 June 2012 |
| | | | | CN | 101520088 | B | 19 June 2013 |
| JP | 2009180342 | A | 13 August 2009 | JP | 5044821 | B2 | 10 October 2012 |

Form PCT/ISA/210 (patent family annex) (July 2022)